# FASCICULE DE BREVET EUROPEEN

(11) **EP 4 293 212 B1**
(45) Date de publication et mention de la délivrance du brevet: **14.05.2025**
(21) Numéro de dépôt: 23178696.3
(22) Date de dépôt: 12.06.2023
(51) Int. Cl.: F02C 3/22, F02C 7/22, F02C 7/224, F02C 7/232, F02C 9/40

(54) **SYSTÈME DE BOÎTIER CONTENANT UN ÉCHANGEUR THERMIQUE POUR RÉCHAUFFER DU DIHYDROGÈNE**
GEHÄUSESYSTEM MIT WÄRMETAUSCHER ZUR ERWÄRMUNG VON DIHYDROGEN
HOUSING SYSTEM CONTAINING A HEAT EXCHANGER FOR HEATING DIHYDROGEN

(30) Priorité: 17.06.2022 FR 2205965
(43) Date de publication de la demande: 20.12.2023
(73) Titulaire: AIRBUS OPERATIONS, 31060 Toulouse Cedex 9 (FR)
(72) Inventeur: JOUBERT, Romain, 31060 TOULOUSE (FR); CZAPLA, Lionel, 31060 TOULOUSE (FR); MILLIERE, Jérôme, 31060 TOULOUSE (FR)
(74) Mandataire: Cabinet Le Guen Maillet

(56) Documents cités:
- EP-A1- 4 012 168
- FR-A1- 3 110 938

## Description

### DOMAINE TECHNIQUE

La présente invention concerne un système de boîtier contenant un échangeur thermique qui permet de réchauffer du dihydrogène traversant ledit échangeur thermique, ainsi qu'un aéronef comportant un tel système de boîtier.

### ÉTAT DE LA TECHNIQUE ANTÉRIEURE

Afin de réduire la consommation de kérosène dans les moteurs d'aéronef, il est connu d'utiliser le dihydrogène comme carburant. L'aéronef comporte alors un système principal d'alimentation qui comporte des réservoirs de dihydrogène liquide. Pour être utilisé par les moteurs, le dihydrogène doit être sous forme gazeuse et pour cela, le système principal d'alimentation comporte des échangeurs thermiques qui assurent le réchauffage du dihydrogène à partir d'un fluide caloporteur chaud. Pour amener le dihydrogène du réservoir au moteur, le système principal d'alimentation comporte un réseau de canalisations, de pompes et de vannes qui va des réservoirs aux moteurs en passant par les échangeurs thermiques.

Pour limiter les risques d'incidents liés à l'utilisation du dihydrogène, des systèmes de sécurité sont mis en œuvre autour des échangeurs thermiques. Bien que les systèmes actuellement mis en œuvre soient efficaces, il est nécessaire de trouver de nouveaux arrangements particulièrement simples à mettre en œuvre.

Un système de boîtier selon l'état de la technique est connu de FR 3 110 938 A1.

### EXPOSE DE L'INVENTION

Un objet de la présente invention est de proposer selon la revendication 1, un système de boîtier contenant un échangeur thermique qui permet de réchauffer du dihydrogène traversant ledit échangeur thermique pour alimenter un moteur d'aéronef par exemple.

À cet effet, est proposé un système de boîtier destiné à être entre une canalisation d'apport et une canalisation d'évacuation dans lesquelles circule un fluide caloporteur, ledit système de boîtier comportant :
- un boîtier étanche divisé par une paroi de séparation étanche en un premier volume et un deuxième volume rempli d'un gaz inerte au regard du dihydrogène,
- une pompe à vide fluidiquement connectée au premier volume et configurée pour, en fonctionnement, faire le vide dans le premier volume,
- une canalisation amont le long de laquelle est montée une électrovanne amont et destinée à être fluidiquement connectée à un réservoir de dihydrogène,
- une canalisation aval le long de laquelle est montée une électrovanne aval et destinée à être fluidiquement connectée à un moteur,
- un échangeur thermique fixé à l'intérieur du boîtier à travers la paroi de séparation, qui présente une première entrée fluidiquement connectée à la canalisation amont en aval de l'électrovanne amont et une première sortie fluidiquement connectée à la canalisation aval en amont de l'électrovanne aval, et qui présente une deuxième entrée destinée à être fluidiquement connectée à la canalisation d'apport et une deuxième sortie destinée à être fluidiquement connectée à la canalisation d'évacuation, où la première entrée est disposée dans le premier volume et la première sortie est disposée dans le deuxième volume,
- un premier capteur de pression disposé dans le premier volume,
- un deuxième capteur de pression disposé dans le deuxième volume,
- une unité de contrôle arrangée pour recevoir des valeurs des pressions mesurées par les capteurs de pression, pour détecter, d'une part, si l'écart en valeur absolue entre deux valeurs successives de la pression dans le premier volume est inférieur à un premier seuil ou supérieur à un deuxième seuil qui est supérieur ou égal au premier seuil, et d'autre part, si l'écart en valeur absolue entre deux valeurs successives de la pression dans le deuxième volume est inférieur à un autre premier seuil ou supérieur à un autre deuxième seuil qui est supérieur ou égal audit autre premier seuil, et pour fermer les électrovannes, si elle détecte un écart en valeur absolue entre deux valeurs de pression successives au-delà du deuxième seuil dans le premier volume ou dudit autre deuxième seuil dans le deuxième volume.

Un tel système de boîtier permet d'isoler le boîtier en cas de fuite.

Avantageusement, le boîtier comporte au niveau d'une paroi dudit premier volume, un clapet de surpression.

Avantageusement, le boîtier comporte au niveau d'une paroi dudit deuxième volume, une prise d'entrée destinée à être fluidiquement connectée à une source de gaz inerte sous pression.

Avantageusement, le boîtier comporte au niveau d'une paroi dudit deuxième volume, une prise de sortie par laquelle le gaz peut être évacué.

Selon un mode de réalisation particulier, la paroi de séparation comporte un rebord solidaire des parois du boîtier et s'étendant à l'intérieur du premier volume, une paroi centrale s'étendant autour de l'échangeur thermique et solidaire de ce dernier, et une paroi de jonction s'étendant entre le rebord et la paroi centrale, fixée en appui contre une face du rebord orientée vers le deuxième volume et en appui contre une face de la paroi centrale orientée vers le deuxième volume.

Selon un autre mode de réalisation particulier, la paroi de séparation comporte un rebord solidaire des parois du boîtier et s'étendant à l'intérieur du premier volume et une paroi centrale s'étendant autour de l'échangeur thermique et solidaire de ce dernier, où la paroi centrale est fixée en appui contre une face du rebord orientée vers le deuxième volume. Avantageusement, le système de boîtier comporte pour chaque volume, au moins un capteur supplémentaire parmi un capteur de dihydrogène et un capteur de dioxygène, disposé dans ledit volume, et l'unité de contrôle est arrangée pour recevoir des valeurs supplémentaires des pressions mesurées par chaque capteur supplémentaire, pour comparer chaque valeur supplémentaire ainsi reçue à un seuil supplémentaire, et pour fermer les électrovannes si une valeur supplémentaire est supérieure audit seuil supplémentaire.

L'invention propose également un aéronef selon la revendication 8, comportant :
- un réservoir de dihydrogène,
- un moteur,
- un système de boîtier selon l'une des variantes précédentes, où la canalisation amont s'étend entre le réservoir et la première entrée de l'échangeur thermique, où la canalisation aval s'étend entre la première sortie de l'échangeur thermique et le moteur, et
- un circuit de fluide caloporteur comportant une canalisation d'apport fluidiquement connectée à la deuxième entrée de l'échangeur thermique et une canalisation d'évacuation fluidiquement connectée à la deuxième sortie de l'échangeur thermique.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de dessus d'un aéronef selon l'invention,
Fig. 2 est une représentation schématique d'un système de boîtier selon un premier mode de réalisation de l'invention, et
Fig. 3 est une représentation schématique d'un système de boîtier selon un deuxième mode de réalisation de l'invention.

### EXPOSÉ DÉTAILLÉ DE MODES DE RÉALISATION

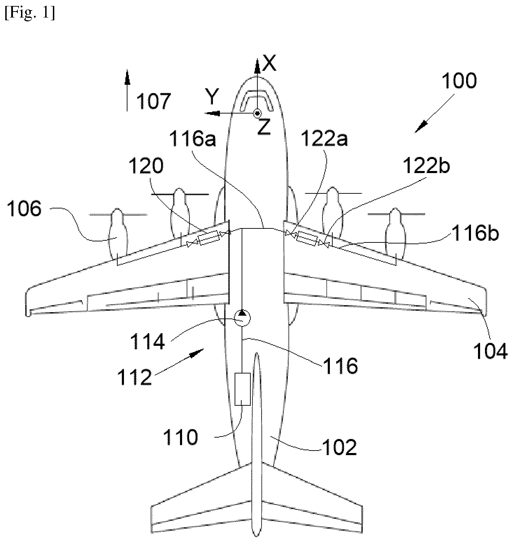

Dans la description qui suit, les termes relatifs à une position sont pris en référence à un aéronef en position normale de vol, c'est-à-dire tel que représenté sur la Fig. 1.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du dihydrogène gazeux, en particulier à 300K, comme carburant. Dans le mode de réalisation de l'invention présenté à la Fig. 1 le moteur 106 est un moteur à hélice, mais tout autre type de moteur est envisageable.

La flèche 107 indique la direction en marche avant de l'aéronef 100.

L'aéronef 100 comporte un réservoir 110 dans lequel est stocké le dihydrogène sous forme liquide, en particulier à 30K. Dans le mode de réalisation de l'invention, le réservoir 110 est disposé à l'arrière du fuselage 102, mais un positionnement différent est possible.

Les positions « amont » et « aval » s'entendent par rapport au sens de l'écoulement du fluide. L'aéronef 100 comporte également un système de distribution 112 comportant entre autres une canalisation 116 qui relie fluidiquement le réservoir au moteur 106. Le système de distribution 112 comporte également une pompe 114 montée sur la canalisation 116 pour entraîner le dihydrogène en sortie du réservoir 110 dans la canalisation 116 vers le moteur 106.

Avant d'arriver au moteur 106, le dihydrogène passe dans un système de boîtier 120 selon l'invention et qui comporte la canalisation 116 qui alimente le moteur 106. La canalisation 116 se divise ainsi en une canalisation amont 116a qui s'étend entre le réservoir 110 et une première entrée du système de boîtier 120 et une canalisation aval 116b qui s'étend entre une première sortie du système de boîtier 120 et le moteur 106.

Le système de boîtier 120 comporte la canalisation amont 116a le long de laquelle est montée une électrovanne amont 122a et la canalisation aval 116b le long de laquelle est montée une électrovanne aval 122b et les électrovannes 122a-b sont ainsi en amont de la première entrée et en aval de la première sortie du système de boîtier 120. Lorsque les électrovannes 122a-b sont ouvertes, le dihydrogène arrive au niveau de l'électrovanne amont 122a, traverse le système de boîtier 120 et ressort au niveau de l'électrovanne aval 122b pour alimenter le moteur 106. Lorsque l'électrovanne amont 122a est fermée, le dihydrogène n'arrive pas au système de boîtier 120 et lorsque l'électrovanne aval 122b est fermée, le dihydrogène ne sort pas du système de boîtier 120.

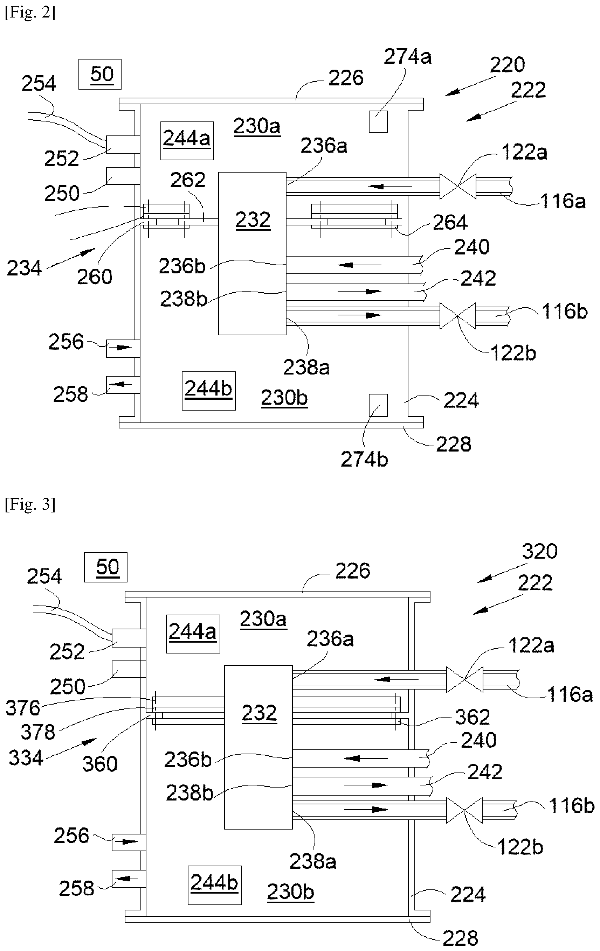

La Fig. 2 montre le système de boîtier 220 selon un premier mode de réalisation et la Fig. 3 montre le système de boîtier 320 selon un deuxième mode de réalisation.

Le système de boîtier 220, 320 comporte un boîtier 222 étanche qui est constitué ici de parois latérales 224, d'une première paroi d'extrémité 226 et d'une deuxième paroi d'extrémité 228 qui sont fixées entre elles de manière étanche pour délimiter un volume intérieur 230a-b.

Le système de boîtier 220, 320 comporte une paroi de séparation 234, 334 qui est solidaire des parois, ici des parois latérales 224, et qui sépare le volume intérieur 230a-b en un premier volume 230a entre la paroi de séparation 234, 334 et la première paroi d'extrémité 226 et en un deuxième volume 230b entre la paroi de séparation 234, 334 et la deuxième paroi d'extrémité 228.

La paroi de séparation 234, 334 forme une barrière étanche entre les deux volumes 230a et 230b et peut prendre différentes formes dont un premier exemple est représenté sur la Fig. 2 et un deuxième exemple est représenté sur la Fig. 3. Le boîtier 222 est ainsi divisé par la paroi de séparation 234, 334 en un premier volume 230a et un deuxième volume 230b.

Le système de boîtier 220, 320 comporte également une pompe à vide 250 fluidiquement connectée au premier volume 230a et qui, en fonctionnement, est arrangée pour faire le vide dans le premier volume 230a. Ainsi, les gaz sont extraits du premier volume 230a où le vide est fait et la pression y est diminuée.

Le deuxième volume 230b est rempli d'un gaz inerte au regard du dihydrogène, en particulier sous forme liquide, c'est-à-dire qu'il ne présente pas de danger en cas de mélange avec le dihydrogène. Le gaz inerte est par exemple du diazote.

Le système de boîtier 220, 320 comporte un échangeur thermique 232 qui est fixé à l'intérieur du boîtier 222 et qui assure le réchauffage du dihydrogène en particulier de 30K à 300K. L'échangeur thermique 232 comporte une première entrée 236a fluidiquement connectée à la canalisation amont 116a en aval de l'électrovanne amont 122a et une première sortie 238a fluidiquement connectée à la canalisation aval 116b en amont de l'électrovanne aval 122b. Le dihydrogène arrive donc dans l'échangeur thermique 232 par la première entrée 236a et ressort réchauffé par la première sortie 238a.

La première entrée 236a est disposée dans le premier volume 230a et la première sortie 238a est disposée dans le deuxième volume 230b, et l'échangeur thermique 232 traverse donc la paroi de séparation 234, 334 de manière étanche. Il y a donc une première partie de l'échangeur thermique 232 localisée dans le premier volume 230a et une deuxième partie de l'échangeur thermique 232 localisée dans le deuxième volume 230b.

Pour atteindre la première entrée 236a, la canalisation amont 116a traverse de manière étanche une paroi, ici une paroi latérale 224, du boîtier 222 et de la même manière, pour atteindre la première sortie 238a, la canalisation aval 116b traverse de manière étanche une paroi, ici une paroi latérale 224, du boîtier 222.

L'échangeur thermique 232 comporte une deuxième entrée 236b fluidiquement connectée à une canalisation d'apport 240 et une deuxième sortie 238b fluidiquement connectée à une canalisation d'évacuation 242. La canalisation d'apport 240 et la canalisation d'évacuation 242 assurent respectivement l'alimentation de l'échangeur thermique 232 en fluide caloporteur et l'évacuation de l'échangeur thermique 232 du fluide caloporteur.

La canalisation d'apport 240 et la canalisation d'évacuation 242 font partie d'un circuit de fluide caloporteur comportant également un réservoir dans lequel est stocké le fluide caloporteur, un système chauffant qui chauffe le fluide caloporteur et au moins une pompe qui crée un courant de fluide caloporteur. Le fluide caloporteur est entraîné par la pompe dans la canalisation d'apport 240 du réservoir vers la deuxième entrée 236b en traversant le système chauffant, puis après avoir traversé l'échangeur thermique 232, le fluide caloporteur rejoint le réservoir par la canalisation d'évacuation 242.

Préférentiellement, le fluide caloporteur est un fluide qui ne présente pas de danger lorsqu'il est mélangé avec le dihydrogène, comme par exemple du diazote N₂ à 743K.

Dans les modes de réalisation de l'invention présentés aux Figs. 2 et3, la deuxième entrée 236b et la deuxième sortie 238b sont disposées dans le deuxième volume 230b, mais un arrangement différent est possible.

Pour atteindre la deuxième entrée 236b, la canalisation d'apport 240 traverse de manière étanche une paroi, ici une paroi latérale 224, du boîtier 222 et de la même manière, pour atteindre la deuxième sortie 238b, la canalisation d'évacuation 242 traverse de manière étanche une paroi, ici une paroi latérale 224, du boîtier 222.

L'échangeur thermique 232 assure ainsi un échange de calories entre le fluide caloporteur qui se refroidit et le dihydrogène qui se réchauffe.

Le système de boîtier 220, 320 comprend également dans le premier volume 230a, un premier capteur de pression 244a et dans le deuxième volume 230b, un deuxième capteur de pression 244b. Le premier capteur de pression 244a détermine la pression dans le premier volume 230a et le deuxième capteur de pression 244b détermine la pression dans le deuxième volume 230b.

Le système de boîtier 220, 320 comprend également une unité de contrôle 50 qui est connectée aux capteurs de pression 244a-b et arrangée pour recevoir les valeurs des pressions mesurées par les capteurs de pression 244a-b.

L'unité de contrôle 50 est également connectée aux électrovannes amont 122a et aval 112b et les commandes en ouverture et en fermeture.

L'unité de contrôle 50 reçoit régulièrement les valeurs transmises par les capteurs de pression 244a-b et représentatives des pressions dans les volumes 230a-b.

L'unité de contrôle 50 compare deux valeurs successives de la pression dans chaque volume 230a-b.

L'unité de contrôle 50 est arrangée pour détecter si l'écart en valeur absolue entre deux valeurs successives de la pression dans le premier volume 230a est inférieur à un premier seuil (cas positif), c'est-à-dire si la pression dans ledit premier volume 230a reste stable, ou si l'écart en valeur absolue entre les deux valeurs successives est supérieur à un deuxième seuil (cas négatif), c'est-à-dire si la pression dans ledit premier volume 230a varie. Le deuxième seuil est supérieur ou égal au premier seuil.

De la même manière, l'unité de contrôle 50 est arrangée pour détecter si l'écart en valeur absolue entre deux valeurs successives de la pression dans le deuxième volume 230b est inférieur à un autre premier seuil (cas positif), c'est-à-dire si la pression dans ledit deuxième volume 230b reste stable, ou si l'écart en valeur absolue entre les deux valeurs successives est supérieur à un autre deuxième seuil (cas négatif), c'est-à-dire si la pression dans ledit deuxième volume 230b varie. Ledit autre deuxième seuil est supérieur ou égal audit autre premier seuil.

Le premier seuil et le deuxième seuil, ainsi que ledit autre premier seuil et ledit autre deuxième seuil peuvent être égaux au moins pour certains d'entre eux ou tous différents. Lorsque l'unité de contrôle 50 détecte au moins un cas négatif pour le premier volume 230a ou le deuxième volume 230b, c'est-à-dire un écart en valeur absolue entre deux valeurs de pression successives au-delà du deuxième seuil dans le premier volume 230a ou dudit autre deuxième seuil dans le deuxième volume 230b, l'unité de contrôle 50 commande la fermeture des électrovannes amont 122a et aval 112b pour isoler la fuite.

Lorsque la variation de pression reste en-deçà d'un premier seuil pour le premier volume 230a et le deuxième volume 230b, c'est-à-dire deux cas positifs, l'unité de contrôle 50 maintient les électrovannes amont 122a et aval 112b ouvertes.

Ainsi, en cas de détection d'une fuite de dihydrogène au niveau des canalisations et des connexions, ou d'une fuite de l'étanchéité du boîtier 222, l'unité de contrôle 50 commande la fermeture des électrovannes 122a-b et le boîtier 222 est alors isolé par arrêt du flux de dihydrogène et il pourra être remplacé, vidé et réparé au cours d'opérations de maintenance ultérieures.

En cas de fuite dans le premier volume 230a et pour limiter les risques d'explosion du boîtier 222, le boîtier 222 comporte au niveau d'une paroi dudit premier volume 230a, ici une paroi latérale 224, un clapet de surpression 252 qui débouche soit directement à l'air libre, soit dans une conduite 254 qui canalise le gaz qui s'échappe vers un endroit prévu à cet effet. Le clapet de suppression 252 est calibré de manière à éviter que la pression ne dépasse la résistance du boîtier 222.

Pour alimenter le deuxième volume 230b en gaz inerte, le boîtier 222 comporte au niveau d'une paroi dudit deuxième volume 230b, ici une paroi latérale 224, une prise d'entrée 256 à laquelle une source de gaz inerte sous pression est fluidiquement connectée.

Pour vidanger le deuxième volume 230b, le boîtier 222 comporte au niveau d'une paroi dudit deuxième volume 230b, ici une paroi latérale 224, une prise de sortie 258 par laquelle le gaz contenu dans le deuxième volume 230b peut être évacué.

Pour limiter les risques de fuites de dihydrogène le long de la canalisation 116, celle-ci est de préférence une canalisation à double paroi. Mais pour les parties de la canalisation 116 qui se trouvent dans le boîtier 222, il est possible d'utiliser des canalisations à une seule paroi pour une simplification de fabrication.

Dans le premier mode de réalisation de l'invention, la paroi de séparation 234 comporte un rebord 260 solidaire des parois du boîtier 222, ici des parois latérales 224, et s'étendant à l'intérieur du premier volume 230a.

La paroi de séparation 234 comporte également une paroi centrale 262 s'étendant autour de l'échangeur thermique 232 et solidaire de ce dernier. La paroi centrale 262 est ici parallèle au rebord 260.

La paroi de séparation 234 comporte également une paroi de jonction 264 qui s'étend entre le rebord 260 et la paroi centrale 262, qui est fixée, d'une part, en appui contre une face du rebord 260 orientée vers le deuxième volume 230b et, d'autre part, en appui contre une face de la paroi centrale 262 orientée vers le deuxième volume 230b. La paroi de jonction 264 est ainsi disposée du côté du deuxième volume 230b par rapport au rebord 260 et à la paroi centrale 262. La fixation est réalisée par exemple à l'aide de vis de serrage ou de points de soudure ou tout autre moyen de fixation approprié. La paroi de jonction 264 est ici parallèle au rebord 260 et à la paroi centrale 262.

La position de la paroi de jonction 264 du côté du deuxième volume 230b évite que les moyens de fixation ne travaillent en arrachement et permet de plaquer la paroi de jonction 264 contre le rebord 260 et la paroi centrale 262 du fait de la différence de pression entre les deux volumes 230a-b.

Des joints d'étanchéité peuvent être disposés entre le rebord 260 et la paroi de jonction 264, d'une part, et entre la paroi centrale 262 et la paroi de jonction 264, d'autre part.

Dans le deuxième mode de réalisation de l'invention, la paroi de séparation 334 comporte un rebord 360 solidaire des parois du boîtier 222, ici des parois latérales 224, et s'étendant à l'intérieur du premier volume 230a.

La paroi de séparation 234 comporte également une paroi centrale 362 s'étendant autour de l'échangeur thermique 232 et solidaire de ce dernier. La paroi centrale 362 est ici parallèle au rebord 260. La paroi centrale 362 est fixée en appui contre une face du rebord 360 orientée vers le deuxième volume 230b. La paroi centrale 362 est ainsi disposée du côté du deuxième volume 230b par rapport au rebord 360. La fixation est réalisée par exemple à l'aide de vis de serrage ou de points de soudure ou tout autre moyen de fixation approprié.

La position de la paroi centrale 362 du côté du deuxième volume 230b évite que les moyens de fixation ne travaillent en arrachement et permet de plaquer la paroi centrale 362 contre le rebord 360 du fait de la différence de pression entre les deux volumes 230a-b.

Des joints d'étanchéité peuvent être disposés entre le rebord 360 et la paroi centrale 362. Selon un mode de réalisation particulier, en complément des capteurs de pression 244a-b, le système de boîtier 220, 230 comporte, dans chaque volume 230a-b, au moins un capteur supplémentaire 274ab-b, parmi un capteur de dihydrogène et un capteur de dioxygène. Chaque capteur supplémentaire 274a-b est connecté à l'unité de contrôle 50 qui reçoit des valeurs supplémentaires des pressions mesurées par chaque capteur supplémentaire 274a-b, pour comparer chaque valeur supplémentaire ainsi reçue à un seuil supplémentaire, et pour fermer les électrovannes 122a-b si une valeur supplémentaire est supérieure audit seuil supplémentaire. Les valeurs des seuils dans chaque volume 230a-b peuvent être différentes. Selon un mode de réalisation particulier, les faces intérieures des parois 224 et 226 délimitant le premier volume 230a sont recouvertes d'une protection 270 contre les rayonnements thermiques comme par exemple un isolant thermique multicouche. Cette protection 270 limite l'échauffement à l'intérieur du premier volume 230a du fait d'une source de chaleur extérieure et évite ainsi une augmentation de pression en cas de fuite.

Selon un mode de réalisation particulier, les faces extérieures des parois 224, 226 et 228 du boîtier 222 sont recouvertes d'une protection thermique 272. Cette protection thermique 272 limite l'échauffement à l'intérieur du boîtier 222 du fait d'une source de chaleur extérieure et évite ainsi une augmentation de pression en cas de fuite.

Selon un mode de réalisation particulier du premier mode de réalisation, une plaque 276 est fixée entre le rebord 260 et la paroi centrale 262 du côté opposé à la paroi de jonction 264. Symétriquement par rapport à la paroi de jonction 264, la plaque 276 est fixée, d'une part, en appui contre une face du rebord 260 orientée vers le premier volume 230a et, d'autre part, en appui contre une face de la paroi centrale 262 orientée vers le premier volume 230a.

La plaque 276 comporte une couche isolante 278 qui est en appui contre le rebord 260 et la paroi centrale 262. Un tel arrangement contient une éventuelle surpression dans le premier volume 230a en cas de fuite et évite la contamination du deuxième volume 230b et une augmentation brusque de pression si le dihydrogène passe du premier volume 230a au deuxième volume 230b, c'est-à-dire d'une zone froide à une zone chaude.

De la même manière, selon un mode de réalisation particulier du deuxième mode de réalisation, une plaque 376 s'étend autour de l'échangeur thermique 232 et solidaire de ce dernier et elle est fixée en appui contre le rebord 360 du côté opposé à la paroi centrale 362, c'est-à-dire dans le premier volume 230a.

La plaque 376 comporte une couche isolante 378 qui est en appui contre le rebord 360. Un tel arrangement contient une éventuelle surpression dans le premier volume 230a en cas de fuite et évite la contamination du deuxième volume 230b et une augmentation brusque de pression si le dihydrogène passe du premier volume 230a au deuxième volume 230b, c'est-à-dire d'une zone froide à une zone chaude.

Selon un mode de réalisation, l'unité de contrôle 50 comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage tel qu'un lecteur de cartes SD (« Secure Digital » en anglais) ; au moins une interface de communication, permettant par exemple à l'unité de contrôle de communiquer avec les électrovannes, les pompes, les capteurs de pression, etc.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système de boîtier (120, 220, 320) destiné à être monté entre une canalisation d'apport (240) et une canalisation d'évacuation (242) dans lesquelles circule un fluide caloporteur, ledit système de boîtier (120, 220, 320) comportant :
- un boîtier (222) étanche divisé par une paroi de séparation (234, 334) étanche en un premier volume (230a) et un deuxième volume (230b) rempli d'un gaz inerte au regard du dihydrogène,
- une pompe à vide (250) fluidiquement connectée au premier volume (230a) et configurée pour, en fonctionnement, faire le vide dans le premier volume (230a),
- une canalisation amont (116a) le long de laquelle est montée une électrovanne amont (122a) et destinée à être fluidiquement connectée à un réservoir (110) de dihydrogène,
- une canalisation aval (116b) le long de laquelle est montée une électrovanne aval (122b) et destinée à être fluidiquement connectée à un moteur (106),
- un échangeur thermique (232) fixé à l'intérieur du boîtier (222) à travers la paroi de séparation (234, 334), qui présente une première entrée (236a) fluidiquement connectée à la canalisation amont (116a) en aval de l'électrovanne amont (122a) et une première sortie (238a) fluidiquement connectée à la canalisation aval (116b) en amont de l'électrovanne aval (122b), et qui présente une deuxième entrée (236b) destinée à être fluidiquement connectée à la canalisation d'apport (240), et une deuxième sortie (238b) destinée à être fluidiquement connectée à la canalisation d'évacuation (242), où la première entrée (236a) est disposée dans le premier volume (230a) et la première sortie (238a) est disposée dans le deuxième volume (230b),
- un premier capteur de pression (244a) disposé dans le premier volume (230a),
- un deuxième capteur de pression (244b) disposé dans le deuxième volume (230b),
- une unité de contrôle (50) arrangée pour recevoir des valeurs des pressions mesurées par les capteurs de pression (224a-b), pour détecter, d'une part, si l'écart en valeur absolue entre deux valeurs successives de la pression dans le premier volume (230a) est inférieur à un premier seuil ou supérieur à un deuxième seuil qui est supérieur ou égal au premier seuil, et d'autre part, si l'écart en valeur absolue entre deux valeurs successives de la pression dans le deuxième volume (230b) est inférieur à un autre premier seuil ou supérieur à un autre deuxième seuil qui est supérieur ou égal audit autre premier seuil, et pour fermer les électrovannes (122a-b) si elle détecte un écart en valeur absolue entre deux valeurs de pression successives au-delà du deuxième seuil dans le premier volume (230a) ou dudit autre deuxième seuil dans le deuxième volume (230b).

2. Système de boîtier (120, 220, 320) selon la revendication 1, **caractérisé en ce que** le boîtier (222) comporte au niveau d'une paroi dudit premier volume (230a), un clapet de surpression (252).

3. Système de boîtier (120, 220, 320) selon l'une des revendications 1 ou 2, **caractérisé en ce que** le boîtier (222) comporte au niveau d'une paroi dudit deuxième volume (230b), une prise d'entrée (256) destinée à être fluidiquement connectée à une source de gaz inerte sous pression.

4. Système de boîtier (120, 220, 320) selon l'une des revendications 1 à 3, **caractérisé en ce que** le boîtier (222) comporte au niveau d'une paroi dudit deuxième volume (230b), une prise de sortie (258) par laquelle le gaz peut être évacué.

5. Système de boîtier (220) selon l'une des revendications 1 à 4, **caractérisé en ce que** la paroi de séparation (234) comporte un rebord (260) solidaire des parois du boîtier (222) et s'étendant à l'intérieur du premier volume (230a), une paroi centrale (262) s'étendant autour de l'échangeur thermique (232) et solidaire de ce dernier, et une paroi de jonction (264) s'étendant entre le rebord (260) et la paroi centrale (262), fixée en appui contre une face du rebord (260) orientée vers le deuxième volume (230b) et en appui contre une face de la paroi centrale (262) orientée vers le deuxième volume (230b).

6. Système de boîtier (320) selon l'une des revendications 1 à 4, **caractérisé en ce que** la paroi de séparation (334) comporte un rebord (360) solidaire des parois du boîtier (222) et s'étendant à l'intérieur du premier volume (230a) et une paroi centrale (362) s'étendant autour de l'échangeur thermique (232) et solidaire de ce dernier, où la paroi centrale (362) est fixée en appui contre une face du rebord (360) orientée vers le deuxième volume (230b).

7. Système de boîtier (120, 220, 320) selon l'une des revendications 1 à 6, **caractérisé en ce qu'**il comporte pour chaque volume (230a-b), au moins un capteur supplémentaire (274a-b) parmi un capteur de dihydrogène et un capteur de dioxygène, disposé dans ledit volume (230a-b), et **en ce que** l'unité de contrôle (50) est arrangée pour recevoir des valeurs supplémentaires des pressions mesurées par chaque capteur supplémentaire (274a-b), pour comparer chaque valeur supplémentaire ainsi reçue à un seuil supplémentaire, et pour fermer les électrovannes (122a-b) si une valeur supplémentaire est supérieure audit seuil supplémentaire.

8. Aéronef (100) comportant :
- un réservoir (110) de dihydrogène,
- un moteur (106),
- un système de boîtier (120, 220, 320) selon l'une des revendications précédentes, où la canalisation amont (116a) s'étend entre le réservoir (110) et la première entrée (236a) de l'échangeur thermique (232), où la canalisation aval (116b) s'étend entre la première sortie (238a) de l'échangeur thermique (232) et le moteur (106), et,
- un circuit de fluide caloporteur comportant une canalisation d'apport (240) fluidiquement connectée à la deuxième entrée (236b) de l'échangeur thermique (232) et une canalisation d'évacuation (242) fluidiquement connectée à la deuxième sortie (238b) de l'échangeur thermique (232).

## Patentansprüche

1. Gehäusesystem (120, 220, 320) zur Montage zwischen einer Zufuhrleitung (240) und einer Abfuhrleitung (242), in denen ein Wärmeträgerfluid zirkuliert, wobei das Gehäusesystem (120, 220, 320) Folgendes aufweist:
- ein dichtes Gehäuse (222), das durch eine dichte Trennwand (234, 334) in ein erstes Volumen (230a) und ein zweites Volumen (230b) unterteilt ist, das mit einem gegenüber Wasserstoff inerten Gas gefüllt ist,
- eine Vakuumpumpe (250), die mit dem ersten Volumen (230a) fluidisch verbunden und so konfiguriert ist, dass sie im Betrieb das erste Volumen (230a) entleert,
- eine stromaufwärtige Leitung (116a), entlang der ein stromaufwärtiges Magnetventil (122a) angebracht ist und die dazu bestimmt ist, fluidisch mit einem Wasserstofftank (110) verbunden zu werden,
- eine stromabwärtige Leitung (116b), entlang der ein stromabwärtiges Magnetventil (122b) angebracht ist und die dazu bestimmt ist, fluidisch mit einem Motor (106) verbunden zu werden,
- einen Wärmetauscher (232), der im Inneren des Gehäuses (222) durch die Trennwand (234, 334) befestigt ist und einen ersten Einlass (236a) aufweist, der fluidisch mit der stromaufwärts gelegenen Leitung (116a) stromabwärts des stromaufwärts gelegenen Magnetventils (122a) verbunden ist, und einen ersten Auslass (238a), der fluidisch mit der stromabwärts gelegenen Leitung (116b) stromaufwärts des stromabwärts gelegenen Magnetventils (122b) verbunden ist, und der einen zweiten Einlass (236b) aufweist, der dazu bestimmt ist, fluidisch mit der Zufuhrleitung (240) verbunden zu werden, und einen zweiten Auslass (238b), der dazu bestimmt ist, fluidisch mit der Abfuhrleitung (242) verbunden zu werden, wobei der erste Einlass (236a) im ersten Volumen (230a) angeordnet ist und der erste Auslass (238a) im zweiten Volumen (230b) angeordnet ist,
- einen ersten Drucksensor (244a), der in dem ersten Volumen (230a) angeordnet ist,
- einen zweiten Drucksensor (244b), der in dem zweiten Volumen (230b) angeordnet ist,
- eine Steuereinheit (50), die so angeordnet ist, dass sie Werte der von den Drucksensoren (224a-b) gemessenen Drücke empfängt, um einerseits zu erfassen, ob die Abweichung des Absolutwerts zwischen zwei aufeinanderfolgenden Werten des Drucks im ersten Volumen (230a) kleiner als ein erster Schwellenwert oder größer als ein zweiter Schwellenwert ist, der größer oder gleich dem ersten Schwellenwert ist, und andererseits, ob die Abweichung des Absolutwerts zwischen zwei aufeinanderfolgenden Werten des Drucks im zweiten Volumen (230b) kleiner als ein anderer erster Schwellenwert oder größer als ein anderer zweiter Schwellenwert ist, der größer oder gleich dem anderen ersten Schwellenwert ist, und um die Magnetventile (122a-b) zu schließen, wenn sie eine Abweichung des Absolutwerts zwischen zwei aufeinanderfolgenden Druckwerten über den zweiten Schwellenwert im ersten Volumen (230a) oder den anderen zweiten Schwellenwert im zweiten Volumen (230b) hinaus erfasst.

2. Gehäusesystem (120, 220, 320) nach Anspruch 1, **dadurch gekennzeichnet, dass** das Gehäuse (222) auf der Höhe einer Wand des ersten Volumens (230a) ein Überdruckventil (252) aufweist.

3. Gehäusesystem (120, 220, 320) nach einem der Ansprüche 1 oder 2, **dadurch gekennzeichnet, dass** das Gehäuse (222) auf der Höhe einer Wand des zweiten Volumens (230b) eine Einlassöffnung (256) aufweist, die dazu bestimmt ist, fluidisch mit einer Quelle von unter Druck stehendem Inertgas verbunden zu werden.

4. Gehäusesystem (120, 220, 320) nach einem der Ansprüche 1 bis 3, **dadurch gekennzeichnet, dass** das Gehäuse (222) an einer Wand des zweiten Volumens (230b) eine Auslassöffnung (258) aufweist, durch die das Gas abgelassen werden kann.

5. Gehäusesystem (220) nach einem der Ansprüche 1 bis 4, **dadurch gekennzeichnet, dass** die Trennwand (234) einen Rand (260) aufweist, der fest mit den Wänden des Gehäuses (222) verbunden ist und sich in das Innere des ersten Volumens (230a) erstreckt, eine Mittelwand (262), die sich um den Wärmetauscher (232) herum erstreckt und fest mit diesem verbunden ist, und eine Verbindungswand (264), die sich zwischen dem Rand (260) und der Mittelwand (262) erstreckt, befestigt in Anlage gegen eine Seite des Randes (260), die dem zweiten Volumen (230b) zugewandt ist, und in Anlage gegen eine Seite der Mittelwand (262), die dem zweiten Volumen (230b) zugewandt ist.

6. Gehäusesystem (320) nach einem der Ansprüche 1 bis 4, **dadurch gekennzeichnet, dass** die Trennwand (334) einen Rand (360) aufweist, der fest mit den Wänden des Gehäuses (222) verbunden ist und sich in das Innere des ersten Volumens (230a) erstreckt, und eine Mittelwand (362), die sich um den Wärmetauscher (232) herum erstreckt und fest mit diesem verbunden ist, wobei die Mittelwand (362) in Anlage gegen eine Seite des Randes (360) befestigt ist, die dem zweiten Volumen (230b) zugewandt ist.

7. Gehäusesystem (120, 220, 320) nach einem der Ansprüche 1 bis 6, **dadurch gekennzeichnet, dass** es für jedes Volumen (230a-b) mindestens einen zusätzlichen Sensor (274a-b) aus einem Wasserstoffsensor und einem Sauerstoffsensor aufweist, der in dem Volumen (230a-b) angeordnet ist, und dass die Steuereinheit (50) so angeordnet ist, dass sie zusätzliche Werte der von jedem zusätzlichen Sensor (274a-b) gemessenen Drücke empfängt, um jeden so empfangenen zusätzlichen Wert mit einem zusätzlichen Schwellenwert zu vergleichen und um die Magnetventile (122a-b) zu schließen, wenn ein zusätzlicher Wert größer als der zusätzliche Schwellenwert ist.

8. Flugzeug (100), das Folgendes aufweist:
- einen Wasserstofftank (110),
- einen Motor (106),
- ein Gehäusesystem (120, 220, 320) nach einem der vorhergehenden Ansprüche, wobei sich die stromaufwärts gelegene Leitung (116a) zwischen dem Tank (110) und dem ersten Einlass (236a) des Wärmetauschers (232) erstreckt, wobei sich die stromabwärts gelegene Leitung (116b) zwischen dem ersten Auslass (238a) des Wärmetauschers (232) und dem Motor (106) erstreckt, und
- einen Wärmeträgerfluidkreislauf mit einer Zufuhrleitung (240), die fluidisch mit dem zweiten Einlass (236b) des Wärmetauschers (232) verbunden ist, und einer Abfuhrleitung (242), die fluidisch mit dem zweiten Auslass (238b) des Wärmetauschers (232) verbunden ist.

## Claims

1. Casing system (120, 220, 320) which is intended to be mounted between a supply pipe (240) and a discharge pipe (242) in which a heat exchange fluid circulates, the casing system (120, 220, 320) comprising:
- a sealed casing (222) which is divided by a sealed separation wall (234, 334) into a first volume (230a) and a second volume (230b) which is filled with a gas which is inert with respect to dihydrogen,
- a vacuum pump (250) which is connected in fluid terms to the first volume (230a) and which is configured, during operation, to generate the make vacuum in the first volume (230a),
- an upstream pipe (116a) along which an upstream solenoid valve (122a) is mounted and which is intended to be connected in fluid terms to a dihydrogen tank (110),
- a downstream pipe (116b) along which a downstream solenoid valve (122b) is mounted and which is intended to be connected in fluid terms to an engine (106),
- a heat exchanger (232) which is fixed inside the casing (222) through the separation wall (234, 334) and which has a first inlet (236a) which is connected in fluid terms to the upstream pipe (116a) downstream of the upstream solenoid valve (122a) and a first outlet (238a) which is connected in fluid terms to the downstream pipe (116b) upstream of the downstream solenoid valve (122b) and which has a second inlet (236b) which is intended to be connected in fluid terms to the supply pipe (240) and a second outlet (238b) which is intended to be connected in fluid terms to the discharge pipe (242), wherein the first inlet (236a) is arranged in the first volume (230a) and the first outlet (238a) is arranged in the second volume (230b),
- a first pressure sensor (244a) which is arranged in the first volume (230a),
- a second pressure sensor (244b) which is arranged in the second volume (230b),
- a control unit (50) which is arranged to receive pressure values measured by the pressure sensors (224a-b) in order to detect, on the one hand, if the deviation in absolute value between two successive values of the pressure in the first volume (230a) is less than a first threshold or greater than a second threshold which is greater than or equal to the first threshold and, on the other hand, if the deviation in absolute value between two successive values of the pressure in the second volume (230b) is less than another first threshold or greater than another second threshold which is greater than or equal to the other first threshold, and to close the solenoid valves (122a-b) if it detects a deviation in absolute value between two successive pressure values beyond the second threshold in the first volume (230a) or the other second threshold in the second volume (230b).

2. Casing system (120, 220, 320) according to claim 1, **characterised in that** the casing (222) comprises in the region of a wall of the first volume (230a) a pressure relief valve (252).

3. Casing system (120, 220, 320) according to either claim 1 or 2, **characterised in that** the casing (222) comprises, in the region of a wall of the second volume (230b), an intake (256) which is intended to be connected in fluid terms to a source of inert gas under pressure.

4. Casing system (120, 220, 320) according to any one of claims 1 to 3, **characterised in that** the casing (222) comprises, in the region of a wall of the second volume (230b), a discharge (258) via which the gas can be discharged.

5. Casing system (220) according to any one of claims 1 to 4, **characterised in that** the separation wall (234) comprises an edge (260) which is fixedly joined to the walls of the casing (222) and which extends inside the first volume (230a), a central wall (262) which extends around the heat exchanger (232) and which is fixedly joined thereto, and a connection wall (264) which extends between the edge (260) and the central wall (262) and which is fixed in abutment against a face of the edge (260) which is orientated towards the second volume (230b) and in abutment against a face of the central wall (262) which is orientated towards the second volume (230b).

6. Casing system (320) according to any one of claims 1 to 4, **characterised in that** the separation wall (334) comprises an edge (360) which is fixedly joined to the walls of the casing (222) and which extends inside the first volume (230a) and a central wall (362) which extends around the heat exchanger (232) and which is fixedly joined thereto, wherein the central wall (362) is fixed in abutment against a face of the edge (360) which is orientated towards the second volume (230b).

7. Casing system (120, 220, 320) according to any one of claims 1 to 6, **characterised in that** it comprises for each volume (230a-b) at least one additional sensor (274a-b), from a dihydrogen sensor and a dioxygen sensor, which is arranged in the volume (230a-b), **in that** the control unit (50) is arranged to receive additional values of the pressures measured by each additional sensor (274a-b) in order to compare each additional value received in this manner with an additional threshold and to close the solenoid valves (122a-b) if an additional value is greater than the additional threshold.

8. Aircraft (100) comprising:
- a dihydrogen tank (110),
- an engine (106),
- a casing system (120, 220, 320) according to any one of the preceding claims, wherein the upstream pipe (116a) extends between the tank (110) and the first inlet (236a) of the heat exchanger (232), wherein the downstream pipe (116b) extends between the first outlet (238a) of the heat exchanger (232) and the engine (106), and,
- a heat exchange fluid circuit which comprises a supply pipe (240) which is connected in fluid terms to the second inlet (236b) of the heat exchanger (232) and a discharge pipe (242) which is connected in fluid terms to the second outlet (238b) of the heat exchanger (232).
